# EUROPEAN PATENT APPLICATION

(11) **EP 4 033 791 A2**
(43) Date of publication of application: **27.07.2022**
(21) Application number: 22173968.3
(22) Date of filing: 18.05.2022
(51) Int. Cl.: H04W 4/48, H04W 4/80

(54) **METHOD FOR VEHICLE-MACHINE INTERCONNECTION AND APPARATUS FOR VEHICLE-MACHINE INTERCONNECTION**

(30) Priority: 03.06.2021 CN 202110620141
(71) Applicant: Apollo Intelligent Connectivity (Beijing) Technology Co., Ltd., Beijing 100176 (CN)
(72) Inventor: LIU, Shubin, Beijing, 100176 (CN)
(74) Representative: V.O.

(57) **Abstract**

The present disclosure discloses a method for a vehicle-machine interconnection and an apparatus for a vehicle-machine interconnection, relates to the field of communication technology, and specifically relates to the technical field of Internet of Vehicles. A specific implementation scheme includes: first acquiring device information for a direct wireless connection; then sending the device information to an on-board terminal based on an infrared protocol; and finally receiving a connection request based on the device information, and establishing the direct wireless connection with the on-board terminal sending the connection request. The vehicle-machine interconnection is implemented by data transmission based on the infrared protocol without the need for constantly scanning a surrounding device like a Bluetooth module, thereby saving energy consumption of devices, and improving the pertinence of the vehicle-machine interconnection.

## Description

### TECHNICAL FIELD

The present disclosure relates to the field of communication technology, specifically to the technical field of Internet of Vehicles, and more specifically to a method for a vehicle-machine interconnection and an apparatus for a vehicle-machine interconnection.

### BACKGROUND

With the rapid development of on-board scenarios, people have increasing demand for Internet of Vehicles. The existing interconnection solutions for on-board terminals and mobile terminals include wired interconnections and wireless interconnection, where the wired interconnections are implemented via USB data lines and the like, while the wireless interconnections are implemented by local area networks.

At present, many companies of Internet of Vehicles promote direct wireless connection solutions to improve user experiences, and the existing direct wireless connection solutions achieve the vehicle-machine interconnection experience usually by using Bluetooth and WiFi or hotspots.

### SUMMARY

The present disclosure provides a method for a vehicle-machine interconnection, an apparatus for a vehicle-machine interconnection, an electronic device, and a storage medium.

According to a first aspect of the present disclosure, a method for vehicle-machine interconnection is provided, including: acquiring device information for a direct wireless connection; sending the device information to an on-board terminal based on an infrared protocol; and receiving a connection request based on the device information, and establishing the direct wireless connection with the on-board terminal sending the connection request.

According to a second aspect of the present disclosure, a method for a vehicle-machine interconnection is provided, including: receiving device information sent from a mobile terminal based on an infrared protocol, where the device information is used for a direct wireless connection; sending a connection request to the mobile terminal based on the device information; and establishing the direct wireless connection with the mobile terminal, in response to the connection request being received. According to a third aspect of the present disclosure, an apparatus for vehicle-machine interconnection is provided, including: an acquiring module configured to acquire device information for a direct wireless connection; a first sending module configured to send the device information to an on-board terminal based on an infrared protocol; and a connecting module configured to receive a connection request based on the device information, and establish the direct wireless connection with the on-board terminal sending the connection request.

According to a third aspect of the present disclosure, an apparatus for a vehicle-machine interconnection is provided, including: an acquiring module configured to acquire device information for a direct wireless connection; a first sending module configured to send the device information to an on-board terminal based on an infrared protocol; and a connecting module configured to receive a connection request based on the device information, and establish the direct wireless connection with the on-board terminal sending the connection request.

According to a fourth aspect of the present disclosure, an apparatus for a vehicle-machine interconnection is provided, including: a first receiving module configured to receive device information sent from a mobile terminal based on an infrared protocol, where the device information is used for a direct wireless connection; a sending module configured to send a connection request to the mobile terminal based on the device information; and a connecting module configured to establish the direct wireless connection with the mobile terminal, in response to the connection request being received.

According to a fifth aspect, a mobile terminal is provided, including: an infrared emitter and at least one processor; and a memory communicatively connected to the at least one processor; where the memory stores instructions executable by the at least one processor, and the instructions, when executed by the at least one processor, cause the at least one processor to execute the method for vehicle-machine interconnection in the first aspect; and where the infrared emitter is configured to send device information to an on-board terminal based on an infrared protocol.

According to a sixth aspect of the present disclosure, an on-board terminal is provided, including: an infrared receiver and at least one processor; and a memory communicatively connected to the at least one processor; where the memory stores instructions executable by the at least one processor, and the instructions, when executed by the at least one processor, cause the at least one processor to execute the method for vehicle-machine interconnection in the second aspect; and where the infrared receiver is configured to receive device information sent from a mobile terminal based on an infrared protocol.

According to a seventh aspect of the present disclosure, an embodiment of the present disclosure provides a computer readable medium, storing computer instructions thereon, where the computer instructions are used for causing a computer to execute the method for vehicle-machine interconnection in the first aspect or the second aspect.

According to an eighth aspect of the present disclosure, an embodiment of the present disclosure provides a computer program product, including a computer program, where the computer program, when executed by a processor, implements the method for vehicle-machine interconnection in the first aspect or the second aspect.

It should be understood that contents described in the SUMMARY are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

The accompanying drawings are used for better understanding of the present solution, and do not constitute any limitation of the present disclosure.
Fig. 1 is a flowchart of an embodiment of a method for a vehicle-machine interconnection according to the present disclosure;
Fig. 2 is a schematic diagram of an application scenario of the method for a vehicle-machine interconnection according to the present disclosure;
Fig. 3 is a flowchart of an embodiment of data transmission according to the present disclosure;
Fig. 4 is a flowchart of another embodiment of the method for a vehicle-machine interconnection according to the present disclosure;
Fig. 5 is a flowchart of an embodiment of receiving device information according to the present disclosure;
Fig. 6 is a schematic structural diagram of an embodiment of an apparatus for a vehicle-machine interconnection according to the present disclosure;
Fig. 7 is a schematic structural diagram of another embodiment of the apparatus for a vehicle-machine interconnection according to the present disclosure; and
Fig. 8 is a block diagram of an electronic device configured to implement the method for a vehicle-machine interconnection according to embodiments of the present disclosure.

### DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications can be made to the embodiments described here without departing from the scope and spirit of the present disclosure. Similarly, for clearness and conciseness, descriptions of well-known functions and structures are omitted in the following description.

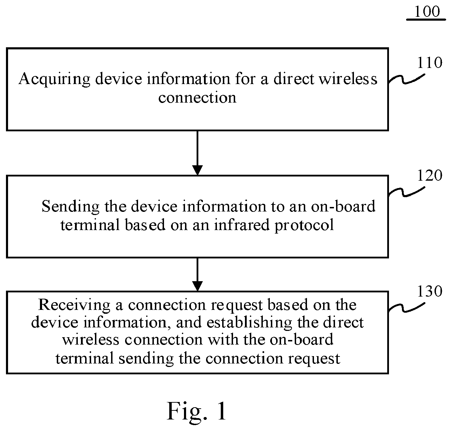

Referring to Fig. 1, Fig. 1 shows a schematic flowchart 100 that may be applied to an embodiment of a method for a vehicle-machine interconnection according to the present disclosure. The method for a vehicle-machine interconnection includes the following steps:

Step 110: acquiring device information for a direct wireless connection.

In the present embodiment, an executing body (for example, a mobile terminal) of the method for a vehicle-machine interconnection may perform a detection on a WIFI P2P (a direct wireless connection) module that performs a direct wireless connection, and acquire device information of the WIFI P2P module. The device information may be information, such as a network port and a network address, that can be used for the direct wireless connection, i.e., the device information may be information such as a network port and a network address of the WIFI P2P module.

Step 120: sending the device information to an on-board terminal based on an infrared protocol.

In the present embodiment, the executing body may have an infrared emitter capable of sending infrared data based on the infrared protocol, and the infrared emitter corresponds to an infrared receiver capable of receiving the infrared data sent from the infrared emitter. The infrared (IR) emitter may receive and translate into an infrared light with a flashing instruction in a specific working mode, the infrared receiver may receive the infrared light emitted from the infrared emitter, and the infrared emitter and the infrared receiver may be installed in a remote controller and various different types of devices, such as a smart phone and a computer. The infrared emitter may be installed in the executing body to emit different infrared signals with the variation of a voltage signal inputted from a signal generator, and the infrared receiver may be installed in the on-board terminal.

The executing body may detect for the infrared receiver of the on-board terminal, and control, when the infrared receiver of the on-board terminal is detected, the infrared emitter to send the device information in accordance with the infrared protocol, i.e., when the infrared receiver is within an effective distance of receiving a signal of the infrared emitter, the infrared emitter may send the device information, and the infrared receiver corresponding to the infrared emitter may receive the device information sent from the infrared emitter.

Step 130: receiving a connection request based on the device information, and establishing the direct wireless connection with the on-board terminal sending the connection request.

In the present embodiment, after the executing body controls the infrared emitter to send the device information, the infrared receiver of the on-board terminal receives the device information, and the on-board terminal may send the connection request for performing the direct wireless connection with the executing body to the executing body based on the information, such as the network port and the network address capable of performing the direct wireless connection, in the device information.

After receiving the connection request sent from the on-board terminal, the executing body establishes the direct wireless connection with the on-board terminal corresponding to the connection request, such that the executing body completes a vehicle-machine interconnection with the on-board terminal. The direct wireless connection may be a point-to-point connection of WiFi devices without the need for a point-to-end connection, such that two WiFi devices establish a connection between each other directly using a WiFi technology beyond the constraints of hotspot (i.e., a network), thereby sharing information and contents with each other.

As an example, the executing body may send the device information including the address and port information of the WIFI P2P module to the infrared receiver of the on-board terminal through the infrared emitter. After the infrared receiver receives the device information, the on-board terminal acquires the address and port information of the WIFI P2P module in the device information, and controls a WIFI P2P module of the on-board terminal to send the connection request based on the address and port information of the WIFI P2P module of the executing body, such that the WIFI P2P module of the on-board terminal performs a direct WIFI connection with the WIFI P2P module of the executing body (the mobile terminal) to complete a vehicle-machine interconnection between the mobile terminal and the on-board terminal.

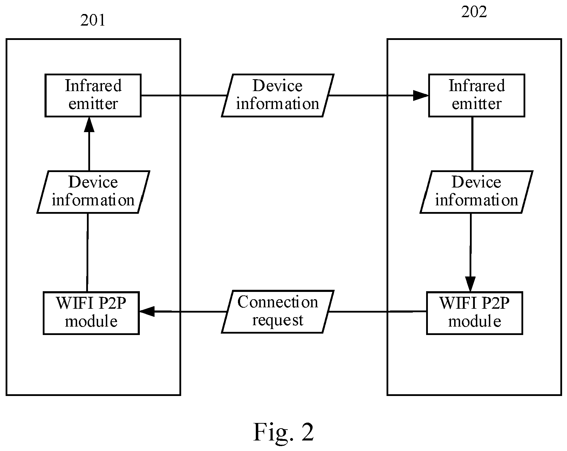

Further referring to Fig. 2, Fig. 2 is a schematic diagram of an application scenario of the method for a vehicle-machine interconnection according to the present embodiment. In the application scenario of Fig. 2, a mobile terminal 201 performs a detection on a WIFI P2P module, acquires device information, detects an infrared receiver of an on-board terminal 202 through an infrared emitter, and sends the device information used for a direct wireless connection to the infrared receiver of the on-board terminal 202. Then, the infrared receiver of the on-board terminal 202 receives the device information sent from the infrared emitter, and controls the WIFI P2P module to send a connection request to the mobile terminal 201 based on the device information. The WIFI P2P module of the mobile terminal 201 receives the connection request sent from the on-board terminal 202, establishes the direct wireless connection with the on-board terminal 202, and completes a vehicle-machine interconnection between the mobile terminal 201 and the on-board terminal 202.

The method for a vehicle-machine interconnection provided in embodiments of the present disclosure includes acquiring device information for a direct wireless connection, then sending the device information to an on-board terminal based on an infrared protocol, and finally receiving a connection request based on the device information, and establishing the direct wireless connection with the on-board terminal sending the connection request. The vehicle-machine interconnection is implemented by data transmission based on the infrared protocol without the need for constantly scanning a surrounding device like a Bluetooth module, thereby saving energy consumption of devices, being adapted to point-to-point transmission at a short distance, and improving the pertinence of the vehicle-machine interconnection. In a case where data is transmitted based on the infrared protocol, when the data is required to be transmitted, the data transmission can be completed by only transmitting the data through infrared emission based on the infrared protocol, which improves the efficiency of the data transmission.

As an alternative implementation, the step 120 of sending the device information to the on-board terminal based on the infrared protocol may include: encoding the device information to obtain encoded device information; and sending the encoded device information to the on-board terminal based on the infrared protocol.

Specifically, after acquiring the device information for the direct wireless connection through the detection, the executing body encodes the device information using an infrared protocol generating technology to generate the encoded device information that can be sent based on the infrared protocol, where the encoded device information may be an infrared signal for infrared emission.

After acquiring the encoded device information, the executing body may send the encoded device information to the on-board terminal based on the infrared protocol through the infrared emitter, and the infrared receiver of the on-board terminal can receive the encoded device information based on the infrared protocol.

In the present embodiment, the device information is encapsulated to an infrared signal; data is transmitted based on infrared emission, so that when the data is required to be transmitted, it is only necessary to encode the transmission data to obtain encoded data for the infrared emission; and the data may be transmitted by infrared emission based on the infrared protocol, thereby improving the efficiency of the data transmission.

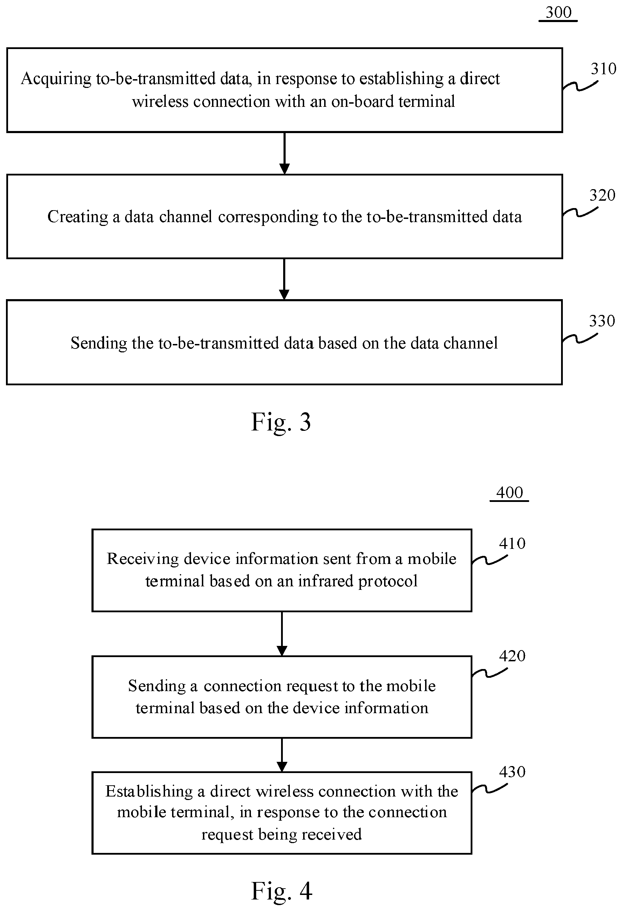

As an alternative implementation, further referring to Fig. 3, the method for a vehicle-machine interconnection may further include the following steps:

Step 310: acquiring to-be-transmitted data, in response to establishing a direct wireless connection with an on-board terminal.

In this step, after receiving a connection request sent from the on-board terminal based on device information, the executing body controls a WIFI P2P module for the direct wireless connection to establish the direct wireless connection with a WIFI P2P module of the on-board terminal. The direct wireless connection (i.e., direct WIFI connection) is a transmission medium implementing point-to-point file sharing based on a wireless WIFI transmission technology. The direct wireless connection can easily, efficiently and fast implement file transfer operations between two devices.

The executing body may acquire the to-be-transmitted data or receive the to-be-transmitted data sent from other devices based on a user operation. The to-be-transmitted data may be data that needs to be transmitted in an on-board scenario, i.e., the to-be-transmitted data may be data sent by a user to the on-board terminal through the executing body, or may be data that needs to be displayed by the on-board terminal to the executing body. As an example, the to-be-transmitted data may include instruction data, multimedia data and voice broadcast data, which need to be sent to the on-board terminal, and the to-be-transmitted data may alternatively include, e.g., control data that needs to be sent from the on-board terminal to the executing body.

Step 320: creating a data channel corresponding to the to-be-transmitted data.

In this step, after acquiring the to-be-transmitted data, the executing body may send a creation request to the on-board terminal via the direct wireless connection. The creation request is used for requesting the creation of the data channel corresponding to the to-be-transmitted data. Each type of to-be-transmitted data corresponds to one data channel. The data channel is used for transmitting to-be-transmitted data of a corresponding type.

After receiving the creation request, the on-board terminal may establish the data channel corresponding to the to-be-transmitted data with the executing body.

As an alternative implementation, the data channel may include at least one of: an instruction channel, a multimedia channel, a voice broadcast channel, or a reverse control channel.

Specifically, the instruction channel may correspond to the instruction data, and is used for transmitting a control instruction of the executing body on the on-board terminal to the on-board terminal.

The multimedia channel corresponds to the multimedia data, and may include a media channel such as a video channel and a voice channel. The video channel is used for transmitting video data such as a video content or video call in the executing body to the on-board terminal; the voice channel is used for transmitting voice data such as a voice content or voice call in the executing body to the on-board terminal; and the multimedia channel may alternatively be used for transmitting multimedia data, e.g., a multimedia file such as a music file and a news file, in the executing body to the on-board terminal.

The voice broadcast channel (TTS voice broadcast channel) corresponds to the voice broadcast data, and may be used for transmitting a voice broadcast file in the executing body where a text is converted into a speech to the on-board terminal.

The reverse control channel corresponds to the control data, and may be used for transmitting a control instruction of the on-board terminal on the executing body.

Step 330: sending the to-be-transmitted data based on the data channel.

In this step, after creating the data channel corresponding to the to-be-transmitted data, the executing body sends the acquired to-be-transmitted data to the on-board terminal via the data channel, such that the on-board terminal can display the to-be-transmitted data, or execute a corresponding instruction based on the to-be-transmitted data.

In the present implementation, a data channel with an on-board terminal is established, thereby satisfying the different needs of data transmission in an on-board scenario, and transmitting different data via different data channels. A data channel is created when data is required to be transmitted, which improves the efficiency of the data transmission and resource utilization in the on-board scenario.

Referring to Fig. 4, Fig. 4 shows a schematic flowchart 400 that may be applied to another embodiment of the method for a vehicle-machine interconnection according to the present disclosure. The method for vehicle-machine interconnection includes the following steps:

Step 410: receiving device information sent from a mobile terminal based on an infrared protocol.

In the present embodiment, an executing body (e.g., an on-board terminal) of the method for a vehicle-machine interconnection may have an infrared receiver that is capable of receiving infrared data based on the infrared protocol. The infrared receiver corresponds to an infrared emitter, and is capable of receiving the infrared data sent from the infrared emitter. The infrared emitter may be installed in the mobile terminal to emit different infrared signals with the variation of a voltage signal inputted from a signal generator, and the infrared receiver may be installed in the executing body.

The executing body may receive the device information sent from the mobile terminal through the infrared receiver, where the device information may be used for a direct wireless connection, and may include information such as a network port and a network address that are used for the direct wireless connection.

Step 420: sending a connection request to the mobile terminal based on the device information.

In the present embodiment, after receiving the device information through the infrared receiver, the executing body may determine the information such as the network port and the network address that are used for the direct wireless connection in the mobile terminal. The executing body sends the connection request for the direct wireless connection with the mobile terminal to the mobile terminal based on the information such as the network port and the network address that are used for the direct wireless connection.

Step 430: establishing a direct wireless connection with the mobile terminal, in response to the connection request being received.

In the present embodiment, after the executing body sends the connection request for the direct wireless connection to the mobile terminal, the mobile terminal receives the connection request, and establishes the direct wireless connection with the executing body corresponding to the connection request, such that the executing body completes the vehicle-machine interconnection with the mobile terminal.

As an example, the mobile terminal may send the device information including address and port information of a WIFI P2P module to the infrared receiver of the executing body through the infrared emitter. After the infrared receiver receives the device information, the executing body acquires the address and port information of the WIFI P2P module in the device information, and controls the WIFI P2P module to send the connection request based on the address and port information of the WIFI P2P module of the mobile terminal. After the mobile terminal receives the connection request, the WIFI P2P module of the mobile terminal performs a direct WIFI connection with the WIFI P2P module of the executing body (the on-board terminal) to complete the vehicle-machine interconnection between the mobile terminal and the on-board terminal.

The method for a vehicle-machine interconnection provided in embodiments of the present disclosure includes receiving device information sent from a mobile terminal based on an infrared protocol, where the device information is used for a direct wireless connection, then sending a connection request to the mobile terminal based on the device information, and finally establishing the direct wireless connection with the mobile terminal in response to the connection request being received. The vehicle-machine interconnection is implemented by data transmission based on the infrared protocol without the need for constantly scanning a surrounding device like a Bluetooth module, thereby saving energy consumption of devices, being adapted to point-to-point transmission at a short distance, and improving the pertinence of the vehicle-machine interconnection. In a case where data is transmitted based on the infrared protocol, when the data is required to be transmitted, the data transmission can be completed by only transmitting the data through infrared emission based on the infrared protocol, which improves the efficiency of the data transmission.

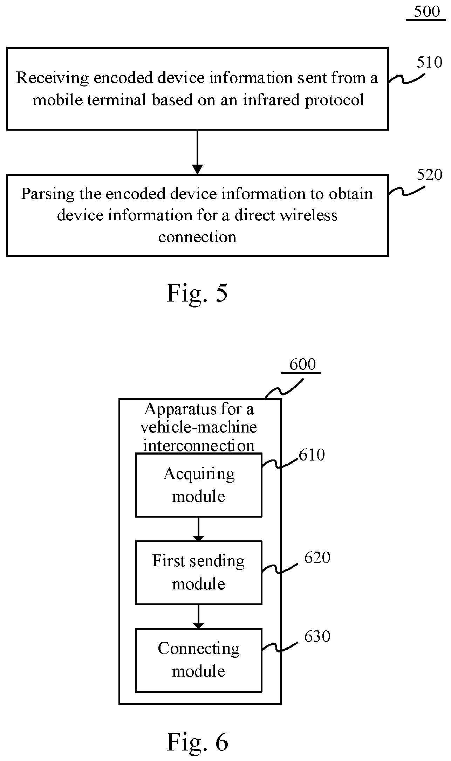

Further referring to Fig. 5, Fig. 5 show the steps of receiving device information, and may include the following steps:

Step 510: receiving encoded device information sent from a mobile terminal based on an infrared protocol.

In this step, after acquiring the device information for a direct wireless connection, the mobile terminal encodes the device information using an infrared protocol generating technology to generate the encoded device information that can be sent based on the infrared protocol, where the encoded device information may be infrared data for infrared emission. The executing body may receive, through an infrared receiver, the encoded device information sent from the mobile terminal.

Step 520: parsing the encoded device information to obtain device information for a direct wireless connection.

In this step, after receiving the encoded device information, the executing body parses the encoded device information to obtain the device information for the direct wireless connection. The device information may be information such as a network port and a network address that can be used for the direct wireless connection. The executing body may send a connection request to the mobile terminal based on the information such as the network port and the network address that are used for the direct wireless connection.

As an example, the executing body parses the encoded device information, to acquire IP address information and port information of a WIFI P2P module of the mobile terminal from the parsed device information, and the executing body controls a WIFI P2P module to send the connection request to the WIFI P2P module of the mobile terminal based on the acquired IP address information and the port information, to establish the direct wireless connection between the executing body (the on-board terminal) and the mobile terminal.

In the present implementation, the encoded device information is sent based on the infrared protocol, and the encoded device information is parsed, thereby improving the security and efficiency of the data transmission.

As an alternative implementation, the method for a vehicle-machine interconnection may further include: establishing a data channel with the mobile terminal, the data channel corresponding to to-be-transmitted data in response to establishing the direct wireless connection with the mobile terminal; and receiving the to-be-transmitted data based on the data channel.

Specifically, after receiving the connection request sent from the executing body based on the device information, the mobile terminal controls a WIFI P2P module for the direct wireless connection to establish the direct wireless connection with the WIFI P2P module of the executing body. The mobile terminal may acquire the to-be-transmitted data or receive the to-be-transmitted data sent from other devices based on a user operation. The to-be-transmitted data may be data that needs to be transmitted in an on-board scenario, i.e., the to-be-transmitted data may be data sent by a user to the executing body through the mobile terminal, or may be data that needs to be displayed by the executing body to the mobile terminal. As an example, the to-be-transmitted data may include instruction data, multimedia data and voice broadcast data, which need to be sent to the executing body, and the to-be-transmitted data may alternatively include, e.g., control data that needs to be sent from the executing body to the mobile terminal.

After acquiring the to-be-transmitted data, the mobile terminal may send a creation request to the executing body via the direct wireless connection. The creation request is used for requesting the creation of the data channel corresponding to the to-be-transmitted data. After receiving the creation request, the executing body may establish the data channel with the mobile terminal, the data channel corresponding to the to-be-transmitted data, where each type of to-be-transmitted data corresponds to one data channel. The data channel is used for transmitting to-be-transmitted data of a corresponding type.

After the executing body establishes the data channel with the mobile terminal, the data channel corresponding to the to-be-transmitted data, the mobile terminal may send the acquired to-be-transmitted data to the executing body via the data channel, such that the executing body can receive the to-be-transmitted data via the data channel, and display the to-be-transmitted data, or execute a corresponding instruction based on the to-be-transmitted data.

Alternatively, the data channel may include at least one of: an instruction channel, a multimedia channel, a voice broadcast channel, or a reverse control channel.

In the present implementation, a data channel with a mobile terminal is established, thereby satisfying the different needs of data transmission in an on-board scenario, and transmitting different data via different data channels. A data channel is created when data is required to be transmitted, which improves the efficiency of the data transmission and resource utilization in the on-board scenario.

Further referring to Fig. 6, as an implementation of the method shown in the above figures, an embodiment of the present disclosure provides an apparatus for vehicle-machine interconnection. The embodiment of the apparatus corresponds to the embodiment of the method shown in Fig. 2, and the apparatus may be specifically applied to a mobile terminal.

As shown in Fig. 6, the apparatus 600 for vehicle-machine interconnection of the present embodiment includes: an acquiring module 610, a first sending module 620, and a connecting module 630.

The acquiring module 610 is configured to acquire device information for a direct wireless connection.

The first sending module 620 is configured to send the device information to an on-board terminal based on an infrared protocol.

The connecting module 630 is configured to receive a connection request based on the device information, and establish the direct wireless connection with the on-board terminal sending the connection request.

In some alternative implementations of the present embodiment, the first sending module includes: an encoding unit configured to encode the device information to obtain encoded device information; and a sending unit configured to send the encoded device information to the on-board terminal based on the infrared protocol.

In some alternative implementations of the present embodiment, the apparatus further includes: a creating module and a second sending module; where the acquiring module is configured to acquire to-be-transmitted data, in response to having established the connection with the on-board terminal; the creating module is configured to create a data channel corresponding to the to-be-transmitted data; and the second sending module is configured to send the to-be-transmitted data based on the data channel.

In some alternative implementations of the present embodiment, the data channel includes at least one of: an instruction channel, a multimedia channel, a voice broadcast channel, and a reverse control channel.

The apparatus for a vehicle-machine interconnection provided in embodiments of the present disclosure acquires device information for a direct wireless connection, then sends the device information to an on-board terminal based on an infrared protocol, and finally receives a connection request based on the device information, and establishes the direct wireless connection with the on-board terminal sending the connection request. The vehicle-machine interconnection is implemented by data transmission based on the infrared protocol without the need for constantly scanning a surrounding device like a Bluetooth module, thereby saving energy consumption of devices, being adapted to point-to-point transmission at a short distance, and improving the pertinence of the vehicle-machine interconnection. In a case where data is transmitted based on the infrared protocol, when the data is required to be transmitted, the data transmission can be completed by only transmitting the data through infrared emission based on the infrared protocol, which improves the efficiency of the data transmission.

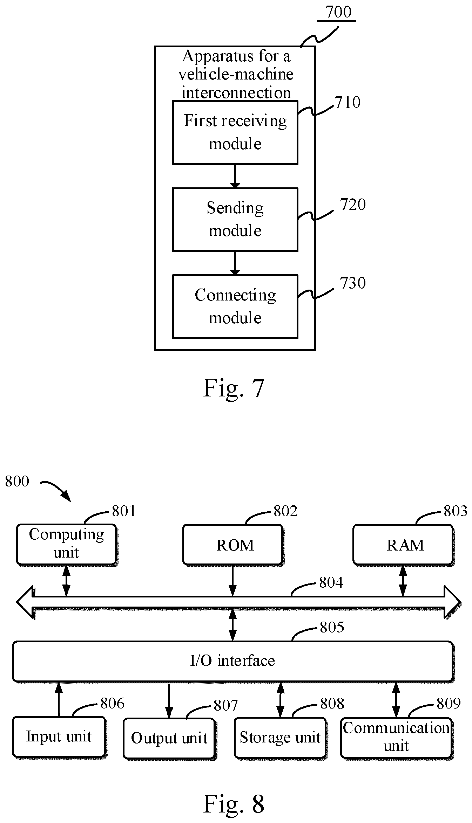

Further referring to Fig. 7, as an implementation of the method shown in the above figures, an embodiment of the present disclosure provides an apparatus for vehicle-machine interconnection. The embodiment of the apparatus corresponds to the embodiment of the method shown in Fig. 4, and the apparatus may be specifically applied to the on-board terminal.

As shown in Fig. 7, the apparatus 700 for vehicle-machine interconnection of the present embodiment includes: a first receiving module 710, a sending module 720, and a connecting module 730.

The first receiving module 710 is configured to receive device information sent from a mobile terminal based on an infrared protocol, where the device information is used for a direct wireless connection.

The sending module 720 is configured to send a connection request to the mobile terminal based on the device information.

The connecting module 730 is configured to establish the direct wireless connection with the mobile terminal, in response to the connection request being received.

In some alternative implementations of the present embodiment, the first receiving module includes: a receiving unit configured to receive encoded device information sent from the mobile terminal based on the infrared protocol; and a parsing unit configured to parse the encoded device information to obtain the device information for the direct wireless connection.

In some alternative implementations of the present embodiment, the apparatus further includes: an establishing module configured to establish a data channel with the mobile terminal, the data channel corresponding to to-be-transmitted data, in response to establishing the direct wireless connection with the mobile terminal; and a second receiving module configured to receive the to-be-transmitted data based on the data channel.

The apparatus for vehicle-machine interconnection provided in embodiments of the present disclosure receives device information sent from a mobile terminal based on an infrared protocol, where the device information is used for a direct wireless connection, then sends a connection request to the mobile terminal based on the device information, and finally establishes the direct wireless connection with the mobile terminal in response to the connection request being received. The vehicle-machine interconnection is implemented by data transmission based on the infrared protocol without the need for constantly scanning a surrounding device like a Bluetooth module, thereby saving energy consumption of devices, being adapted to point-to-point transmission at a short distance, and improving the pertinence of the vehicle-machine interconnection. In a case where data is transmitted based on the infrared protocol, when the data is required to be transmitted, the data transmission can be completed by only transmitting the data through infrared emission based on the infrared protocol, which improves the efficiency of the data transmission.

In the technical solution of the present disclosure, the acquisition, storage, and application of personal information of a user involved are in conformity with relevant laws and regulations, and does not violate public order and good customs.

According to an embodiment of the present disclosure, the present disclosure further provides a mobile terminal having an infrared emitter, an on-board terminal having an infrared receiver, a readable storage medium, and a computer program product.

Fig. 8 shows a schematic block diagram of an example electronic device 800 that may be configured to implement embodiments of the present disclosure. The electronic device is intended to represent various forms of digital computers, such as a laptop computer, a desktop computer, a workbench, a personal digital assistant, a server, a blade server, a mainframe computer, and other suitable computers. The electronic device may alternatively represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 8, the electronic device 800 includes a computing unit 801, which may execute various appropriate actions and processes in accordance with a computer program stored in a read-only memory (ROM) 802 or a computer program loaded into a random access memory (RAM) 803 from a storage unit 808. The RAM 803 may further store various programs and data required by operations of the device 800. The computing unit 801, the ROM 802, and the RAM 803 are connected to each other through a bus 804. An input/output (I/O) interface 805 is also connected to the bus 804.

A plurality of components in the electronic device 800 is connected to the I/O interface 805, including: an input unit 806, such as a keyboard and a mouse; an output unit 807, such as various types of displays and speakers; a storage unit 808, such as a magnetic disk and an optical disk; and a communication unit 809, such as a network card, a modem, and a wireless communication transceiver. The communication unit 809 allows the device 800 to exchange information/data with other devices through a computer network such as the Internet and/or various telecommunication networks.

The computing unit 801 may be various general purpose and/or specific purpose processing components having a processing capability and a computing capability. Some examples of the computing unit 801 include, but are not limited to, a central processing unit (CPU), a graphics processing unit (GPU), various specific purpose artificial intelligence (AI) computing chips, various computing units running a machine learning model algorithm, a digital signal processor (DSP), and any appropriate processor, controller, micro-controller, and the like. The computing unit 801 executes various methods and processes described above, such as the method for a vehicle-machine interconnection. For example, in some embodiments, the method for a vehicle-machine interconnection may be implemented as a computer software program that is tangibly included in a machine readable medium, such as the storage unit 808. In some embodiments, some or all of the computer programs may be loaded and/or installed onto the device 800 via the ROM 802 and/or the communication unit 809. When the computer program is loaded into the RAM 803 and executed by the computing unit 801, one or more steps of the method for a vehicle-machine interconnection described above may be executed. Alternatively, in other embodiments, the computing unit 801 may be configured to execute the method for a vehicle-machine interconnection by any other appropriate approach (e.g., by means of firmware).

Various implementations of the systems and technologies described above herein may be implemented in a digital electronic circuit system, an integrated circuit system, a field programmable gate array (FPGA), an application specific integrated circuit (ASIC), an application specific standard product (ASSP), a system on a chip (SOC), a complex programmable logic device (CPLD), computer hardware, firmware, software, and/or a combination thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input apparatus and at least one output apparatus, and send the data and instructions to the storage system, the at least one input apparatus and the at least one output apparatus..

Program codes for implementing the method of the present disclosure may be compiled using any combination of one or more programming languages. The program codes may be provided to a processor or controller of a general purpose computer, a specific purpose computer, or other programmable apparatuses for data processing, such that the program codes, when executed by the processor or controller, cause the functions/operations specified in the flowcharts and/or block diagrams to be implemented. The program codes may be completely executed on a machine, partially executed on a machine, partially executed on a machine and partially executed on a remote machine as a separate software package, or completely executed on a remote machine or server.

In the context of the present disclosure, a machine readable medium may be a tangible medium which may contain or store a program for use by, or used in combination with, an instruction execution system, apparatus or device. The machine readable medium may be a machine readable signal medium or a machine readable storage medium. The computer readable medium may include, but is not limited to, electronic, magnetic, optical, electromagnetic, infrared, or semiconductor systems, apparatuses, or devices, or any appropriate combination of the above. A more specific example of the machine readable storage medium will include an electrical connection based on one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any appropriate combination of the above.

To provide interaction with a user, the systems and technologies described herein may be implemented on a computer that is provided with: a display apparatus (e.g., a CRT (cathode ray tube) or an LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or tactile feedback); and an input may be received from the user in any form (including an acoustic input, a voice input, or a tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and generally interact with each other through a communication network. The relationship between the client and the server is generated by virtue of computer programs that run on corresponding computers and have a client-server relationship with each other. The server may be a cloud server, a distributed system server, or a server combined with a blockchain.

It should be understood that the various forms of processes shown above may be used to reorder, add, or delete steps. For example, the steps disclosed in the present disclosure may be executed in parallel, sequentially, or in different orders, as long as the desired results of the technical solutions disclosed in the present disclosure can be implemented. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principle of the present disclosure should be encompassed within the scope of protection of the present disclosure.

## Claims

1. A method for a vehicle-machine interconnection, comprising:
acquiring (110) device information for a direct wireless connection;
sending (120) the device information to an on-board terminal based on an infrared protocol; and
receiving (130) a connection request based on the device information, and establishing the direct wireless connection with the on-board terminal sending the connection request.

2. The method according to claim 1, wherein the sending the device information to the on-board terminal based on the infrared protocol comprises:
encoding the device information to obtain encoded device information; and
sending the encoded device information to the on-board terminal based on the infrared protocol.

3. The method according to claim 1 or 2, wherein the method further comprises:
acquiring (310) to-be-transmitted data, in response to establishing the direct wireless connection with the on-board terminal;
creating (320) a data channel corresponding to the to-be-transmitted data; and
sending (330) the to-be-transmitted data based on the data channel.

4. The method according to claim 3, wherein the data channel comprises at least one of:
an instruction channel, a multimedia channel, a voice broadcast channel, or a reverse control channel.

5. A method for a vehicle-machine interaction, comprising:
receiving (410) device information sent from a mobile terminal based on an infrared protocol, where the device information is used for a direct wireless connection;
sending (420) a connection request to the mobile terminal based on the device information; and
establishing (430) the direct wireless connection with the mobile terminal, in response to the connection request being received.

6. The method according to claim 5, wherein the receiving the device information sent from the mobile terminal based on the infrared protocol comprises:
receiving (510) encoded device information sent from the mobile terminal based on the infrared protocol; and
parsing (520) the encoded device information to obtain the device information for the direct wireless connection.

7. The method according to claim 5 or 6, wherein the method further comprises:
establishing a data channel with the mobile terminal, the data channel corresponding to to-be-transmitted data, in response to establishing the direct wireless connection with the mobile terminal; and
receiving the to-be-transmitted data based on the data channel.

8. An apparatus for a vehicle-machine interconnection, comprising:
an acquiring module (610) configured to acquire device information for a direct wireless connection;
a first sending module (620) configured to send the device information to an on-board terminal based on an infrared protocol; and
a connecting module (630) configured to receive a connection request based on the device information, and establish the direct wireless connection with the on-board terminal sending the connection request.

9. The apparatus according to claim 8, wherein the first sending module comprises:
an encoding unit configured to encode the device information to obtain encoded device information; and
a sending unit configured to send the encoded device information to the on-board terminal based on the infrared protocol.

10. The apparatus according to claim 8 or 9, wherein the apparatus further comprises: a creating module and a second sending module; wherein
the acquiring module is configured to acquire to-be-transmitted data, in response to establishing the direct wireless connection with the on-board terminal;
the creating module is configured to create a data channel corresponding to the to-be-transmitted data; and
the second sending module is configured to send the to-be-transmitted data based on the data channel.

11. An apparatus for a vehicle-machine interaction, comprising:
a first receiving module (710) configured to receive device information sent from a mobile terminal based on an infrared protocol, where the device information is used for a direct wireless connection;
a sending module (720) configured to send a connection request to the mobile terminal based on the device information; and
a connecting module (730) configured to establish the direct wireless connection with the mobile terminal, in response to the connection request being received.

12. A mobile terminal, comprising:
an infrared emitter and at least one processor, wherein the infrared emitter is configured to send device information to an on-board terminal based on an infrared protocol; and
a memory communicatively connected to the at least one processor; wherein
the memory stores instructions executable by the at least one processor, and the instructions, when executed by the at least one processor, cause the at least one processor to execute the method according to any one of claims 1 to 4.

13. An on-board terminal, comprising:
an infrared receiver and at least one processor, wherein the infrared receiver is configured to receive device information sent from a mobile terminal based on an infrared protocol; and
a memory communicatively connected to the at least one processor; wherein
the memory stores instructions executable by the at least one processor, and the instructions, when executed by the at least one processor, cause the at least one processor to execute the method according to any one of claims 5 to 7.

14. A non-transitory computer-readable storage medium storing computer instructions, wherein the computer instructions are used for causing a computer to execute the method according to any one of claims 1 to 4 or claims 5 to 7.

15. A computer program product, comprising a computer program, wherein the computer program, when executed by a processor, implements the method according to any one of claims 1 to 4 or claims 5 to 7.
